# EUROPÄISCHE PATENTSCHRIFT

(11) **EP 1 498 287 B1**
(45) Veröffentlichungstag und Bekanntmachung des Hinweises auf die Patenterteilung: **21.02.2007**
(21) Anmeldenummer: 04101657.7
(22) Anmeldetag: 21.04.2004
(51) Int. Cl.: B60C 9/13

(54) **Luftreifen für Kraftfahrzeugräder**
Pneumatic tyre for vehicle wheels
Bandage pneumatique pour roues de véhicule

(30) Priorität: 18.07.2003 DE 10333282
(43) Veröffentlichungstag der Anmeldung: 19.01.2005
(73) Patentinhaber: Continental Aktiengesellschaft, 30165 Hannover (DE)
(72) Erfinder: Härtel, Volker, 82110, Germering (DE); Dr., Huber, Gerald, 30161, Hannover (DE); Kilsch, Armin, 30559, Hannover (DE)

(56) Entgegenhaltungen:
- EP-A- 0 686 514
- EP-A- 1 275 526
- DE-A- 19 908 701

## Beschreibung

Die Erfindung betrifft einen Luftreifen für Kraftfahrzeugräder mit einer Karkasse, auf die eine Lauffläche aufgebracht ist. Insbesondere betrifft die Erfindung solche Luftreifen, die in einem Verfahren zur Ermittlung eines Druckverlustes in einem Luftreifen eingesetzt werden können, bei dem anhand von ermittelten periodischen Schwingungen beim Abrollen des Reifens auf der Grundlage der Auswertung von ABS-Drehzahlsignalen auf einen Druckverlust im Reifen geschlossen werden kann.

Aus dem Stand der Technik sind Verfahren zur Ermittlung eines Druckverlustes in Kraftfahrzeugreifen bekannt, bei denen auf der Grundlage der Auswertung von ABS-Drehzahlsignalen der Druckverlust innerhalb eines Luftreifens über Rechenverfahren ermittelt wird, wobei die sich verändernde Drehzahl eines Rades aufgrund der Veränderung des Abrollumfanges bei Druckverlust ermittelt wird. Nachteiligerweise sind die relativ zu der Luftdruckänderung innerhalb des Reifens sich ergebenden Drehzahländerungen jedoch erst bei erheblichen Druckänderungen sicher ermittelbar. Ebenfalls unterliegt im Rahmen normaler Betriebsbedingungen die Drehzahl eines Rades beispielsweise durch unterschiedliche Straßenbeschaffenheit, Schlupf etc. einer gewissen Streuung, die größer ist als eine durch eine relativ geringere Luftdruckänderung entstehende Drehzahlveränderung eines Rades.

Zudem müssen stets die Absolutwerte der Drehzahlen innerhalb einer bestimmten Abweichung gemittelt werden, so dass eine Luftdruckveränderung innerhalb eines Luftreifens erst bei genügendem Abstand der Mittelwerte und nach entsprechend umfangreichen Rechenprozeduren und Vergleichen der verschiedenen Raddrehzahlen untereinander feststellbar ist. Im Regelfall weisen daher Direktmeßsysteme, beispielsweise Drucksensoren im Reifen, eine größere Empfindlichkeit und Genauigkeit auf.

Aus der DE 199 08 701 A1 ist die Verwendung von Notlaufstützringen im Reifen vorgeschlagen worden, wobei in dem Notlaufstützkörper Unstetigkeiten wie Querrillen oder Beulen vorgesehen sind, die im Notlauffall dem betroffenen Rad ein im Vergleich zu normalen Störgrößen völlig verschiedene Drehzahlschwingung aufprägen, die durch eine Druckverluftdetektionssystem (DDS) leichter detektiert und gegebenenfalls vom Fahrer bemerkt werden kann. Solche Notlaufstützringe erhöhen jedoch das Gesamtgewicht des Rades und erschweren die Montage des Reifens.

Weiterhin ist in der DE 199 08 701 A1 beschrieben, dass über den Umfang verteilte, definierte Unstetigkeiten als Materialanhäufungen oder Materialfehlstellen ausgebildet sind, die in ähnlicher Weise wie Einbuchtungen auf dem Notlaufstützkörper in Form einer ersten Anzahl von gleichmäßig über den Umfang verteilten Unstetigkeiten angeordnet sind, wobei gegebenenfalls eine zur ersten Anzahl unterschiedliche zweite Anzahl von Unstetigkeiten gleichmäßig über den Umfang verteilt wird. Während bei normalem Luftdruck die innerhalb des Reifenkörpers ausgebildeten Materialverstärkungen nicht belastet werden und durch entsprechend symmetrische Anordnungen auch keine Unwucht oder Beeinträchtigungen des Fahrzustandes im Normalbetrieb verursachen, lassen im Notlaufzustand, d. h. bei abnehmendem Luftdruck und damit eintretender Belastung der entsprechenden Bereiche im Reifenkörper solche Materialanhäufungen oder Materialfehlstellen eine oder mehrere gut detektierbare Schwingungen entstehen, die eindeutig von einer Auswertelektronik in einer Signalverarbeitungseinrichtung ausgewertet werden können.

Nachteilig an solchen Materialanhäufungen ist das erhöhte Gewicht aufgrund der an der Reifenflanke ausgebildeten Materialverstärkungen, die den Reifen bei Luftverlust im Notlauf stabilisieren sollen. Durch solche Materialverstärkungen ist es möglich, ein definiertes Notlaufsignal auch dann zu erhalten, wenn keine separaten Notlaufstützkörper innerhalb des Reifens vorgesehen sind, trotzdem der Reifen aber so ausgebildet ist, dass eine Formstabilität im Notlaufzustand erhalten bleibt, wodurch eine begrenzte Fortsetzung der Fahrt ermöglicht werden kann und gleichzeitig ein sicheres Signal zur Erkennung dieses Zustandes detektierbar ist.

Ausgehend von diesem Stand der Technik liegt der Erfindung die Aufgabe zugrunde, einen Luftreifen bereit zu stellen, der im Vergleich zum Stand der Technik leichter ist und über den bereits ein geringer Luftverlust erkannt werden kann.

Erfindungsgemäß wird diese Aufgabe dadurch gelöst, dass in der Karkasse oder in der Lauffläche Abschnitte mit unterschiedlichem Schwingungsverhalten dergestalt ausgebildet sind, dass bei korrektem Reifeninnendruck die von den Abschnitten während des Abrollens des Luftreifens erzeugten Schwingungen einander kompensieren. Ein Luftverlust innerhalb eines solchen Reifens wird durch Reifeneigenschwingungen erkannt, wenn bei Absinken des Reifeninnendruckes unterhalb einer Schwelle der Reifen eine Schwingung erzeugt, die von dem DDS leicht detektierbar ist. Im übertragenen Sinne "meldet" sich der Reifen also bei einem Luftverlust. Hierzu wird die Tatsache ausgenutzt, dass der Reifen bei einem zu niedrigen Reifeninnendruck einen veränderten Straßenkontakt im Bereich der Bodenaufstandsfläche aufweist. Bei einem zu niedrigen Luftdruck tragen in der Bodenaufstandsfläche im wesentlichen nur die Schulterbereiche die Last, während der Mittelbereich der Lauffläche abhebt.

Eine vorteilhafte Ausgestaltung der Erfindung sieht vor, dass in Seitenbereichen der Lauffläche, also beiderseits der Reifenmitte einander gegenüberliegende Seitenpitchfolgen ausgebildet sind, die beim Abrollen Schwingungen erzeugen. Zwischen diesen Seitenpitchfolgen ist eine komplementär ausgebildete Mittelpitchfolge ausgebildet, die ebenfalls beim Abrollen Schwingungen erzeugt, die bei vorschriftsmäßigem Reifeninnendruck die Schwingungen der Seitenpitchfolgen kompensieren. Bei optimal ausgebildeter Geometrie der Reifenaufstandsfläche, also bei einem vorschriftsmäßigen Reifeninnendruck, werden durch den Reifen keinerlei detektierbare Schwingungen durch die Pitchfolgen erzeugt, so dass das DDS keine von den Pitchfolgen erzeugten Schwingungen erkennen kann. In den Seiten- und Mittenbereichen des Reifens ist das Profil mit seinen Pitchfolgen und Profilstegen bzw. Profilrollen unterschiedlich und dergestalt ausgebildet, dass ausschließlich bei vorschriftsmäßigem Bodenkontakt und Flächenpressung der Seiten- und Mittenbereiche der Reifenaufstandsfläche der Reifen schwingungsfrei dreht, d.h. dass bei vorschriftsmäßigem Luftdruck keine Reifeneigenschwingung detektierbar ist. Sobald der Mittenbereich des Reifens seinen vorgesehenen Bodenkontakt aufgrund eines zu geringen Reifeninnendrucks verliert, wird durch die entsprechend ausgebildeten Pitchfolgen des Schulterbereiches dem Reifen eine Drehschwingung aufgezwungen, die durch das DDS leichter als bisher detektiert und gegebenenfalls vom Fahrer bemerkt werden kann.

Eine Weiterbildung der Erfindung sieht vor, dass im Wesentlichen radial umlaufende Verstärkungselemente der Karkasse über den Reifenumfang gruppenweise angeordnet sind und benachbarte Gruppen untereinander unterschiedliche Elastizitätsmoduli aufweisen. Durch das gruppenweise unterschiedliche Dehnungsverhalten der Verstärkungselemente der Karkasse (die Karkasskorde), die beispielsweise alternierend angeordnet sind, wobei die jeweiligen Elastizitätsmoduli der jeweiligen Gruppen so eingestellt ist, dass bei dem vorgeschriebenen Reifeninnendruck der Reifen die erforderliche Rundheit aufweist, die für den üblichen Fahrbetrieb erforderlich ist, wird ein schwingungsfreies Abrollen gewährleistet.

Wenn der Reifeninnendruck jedoch absinkt, ist diese Gleichförmigkeit und der Rundlauf nicht mehr vorhanden und es bildet sich eine geringe Welligkeit der Reifenoberfläche über den Umfang aus, die bei abrollendem Reifen diesen in eine Drehschwingung versetzt, die von dem DDS sicher und frühzeitig erkennbar ist.

Vorteilhafterweise stehen die Verstärkungselemente aus Karkasskorden, die einen sich in Abhängigkeit von den einwirkenden Zugkräften definiert ändernden Elastizitätsmodul aufweisen (Process Adaptive Cords (PAC)). Bei niedrigen Zugkräften weisen solche PAC einen niedrigen Elastizitätsmodul und damit ein ausgeprägtes Dehnverhalten auf, während bei hohen Zugkräften ein hoher Elastizitätsmodul und damit eine geringe Dehnung auftritt. Bei niedrigen Zugkräften, also bei nachlassendem Reifeninnendruck, verändert sich das Elastizitätsverhalten, wenn gruppenweise alternierend eine detektierbare Drehschwingung in dem Reifen vorhanden ist.

Es ist vorgesehen, dass die Karkasskorden gruppenweise abwechselnd mit einem normalen Elastizitätsmodul und einem sich in Abhängigkeit von den einwirkenden Zugkräften definiert ändernden Elastizitätsmodul ausgestattet sind, wobei unter einem normalen Elastizitätsverhalten das im Wesentlichen lineare Verhältnis von Spannung zu Dehnung verstanden wird.

Eine Ausgestaltungsform der Erfindung sieht vor, dass die Verstärkungselemente gruppenweise unterschiedliche Twistlevel, Vorbehandlungsstufen oder Dips aufweisen oder alternativ aus unterschiedlichen Materialien bestehen, so dass durch die vorgenannten Maßnahmen Karkassbereiche oder Karkassgruppen erzeugt werden können, die ein entsprechendes Dehnungsverhalten aufgrund unterschiedlicher Elastizitätsmoduli aufweisen.

Üblicherweise sind Gruppen mit unterschiedlichem Elastizitätsverhalten abwechselnd nebeneinander auf dem Umfang des Luftreifens angeordnet, wobei die jeweils einer Gruppe zuzuordnenden Umfangsabschnitte gleich groß sind, um eine symmetrische Ausgestaltung des Reifens zu verwirklichen. Ebenfalls ist es vorgesehen, dass alle Umfangsabschnitte gleich groß sind, also dass die Umfangsabschnitte benachbarten Gruppen einander entsprechen.

Alternativ ist vorgesehen, dass einzelne Gruppen unterschiedlich lange Umfangsabschnitte beinhalten, wodurch das bei zu niedrigem Reifenluftdruck erzeugte Schwingungsverhalten noch verstärkt wird.

Eine Weiterbildung sieht vor, dass über den Reifenumfang verteilt gruppenweise Gummimaterialien mit unterschiedlichen Elastizitätsmoduli angeordnet sind, wobei diese vorzugsweise im Karkassematerial, in der Base, in der Lauffläche oder im Gürtel angeordnet sind. Auch diese gruppenweise angeordneten Gummimaterialien sind alternierend angeordnet und in einer Vielzahl über den Reifenumfang verteilt. Die Unterschiedlichkeit der Gummimaterialien ist im Hinblick auf den Elastizitätsmoduli durch entsprechendes Compounding, zum Beispiel durch veränderte Mengen an Ruß, einstellbar. Auch hier werden die Elastizitätmoduli der jeweiligen Materialien in den unterschiedlichen Gruppen dergestalt eingestellt, dass bei dem vorgeschriebenen Reifenluftdruck der Reifen die erforderliche Gleichförmigkeit aufweist, die für den üblichen Fahrbetrieb erforderlich ist. Wenn der Reifeninnendruck jedoch absinkt, ist diese Gleichförmigkeit nicht mehr vorhanden und es bildet sich eine geringe Welligkeit der Reifenoberfläche über den Umfang aus, die bei laufendem Reifen diesen in eine von dem DDS sicher und frühzeitig detektierbare Drehschwingung versetzt.

Eine weitere Alternative der Erfindung sieht vor, dass dem Luftreifen in der Endphase der Vulkanisation oder nach Abschluss der Vukanisation in einem separaten Arbeitsgang ein Polygon aufgeprägt wird, das sich durch den später im Betrieb vorhandenen Reifeninnendruck zu einer vollständigen Kreisform ausformt und erst dann wieder entsteht, wenn der Reifeninnendruck unter einen bestimmten Schwellenwert sinkt. Durch ein solches, bei zu niedrigem Reifeninnendruck auftretendes Polygon entsteht dann beim Abrollen ebenfalls eine Drehschwingung, die durch das DDS leicht detektierbar ist.

Eine Alternativlösung besteht darin, dass der Mittenbereich der Lauffläche und/oder die Karkasse im Verhältnis zu den Seitenbereichen eine unterschiedliche, insbesondere eine geringe Elastizität aufweist, so dass bei Absinken des Reifeninnendruckes die sich einstellende Änderung der Abrollumfanges und damit die Drehzahländerung überproportional stark ausbildet. Sobald bei unterschiedlicher Elastizität im Mittenbereich der Reifen aufgrund des Druckverlustes seinen vorgesehenen Bodenkontakt verliert, weil er sich nach innen wölbt, wird durch entsprechend weich ausgebildete Schulterbereiche und die dann erfolgende Dehnung dieser Bereiche der Abrollumfang überproportional erniedrigt, woraus sich Drehzahländerungen ergeben, die das DDS schon bei geringen Änderungen des Reifenluftdruckes detektieren kann. Für eine solche Ausbildung sind insbesondere diejenigen Bauteile geeignet, die beim Aufbauverfahren auf den Reifen aufgespult oder aufgewickelt werden.

Nachfolgend werden anhand der Figuren Ausführungsbeispiele der Erfindungen näher erläutert.

Es zeigen:
- Figur 1: eine Prinzipskizze erfindungsgemäß angeordneter Pitchfolgen;
- Figur 2: Karkasskorde mit über den Reifenumfang gruppenweise unterschiedlichem Dehnungsverhalten;
- Figur 3: Karkasse mit über den Umfang jeweils gruppenweise angeordneten Materialien mit unterschiedlichem Dehnungsverhalten;
- Figur 4: eine prinzipielle Darstellung einer aktiven Gebereinrichtung mit in Reifenseitenwand angeordneten, permanent magnetischen Materialien gemäß dem Stand der Technik;
- Figur 5: eine Notlaufeinrichtung zur Erzeugung charakteristischer Schwingungen in Form eines auf einer Felge abgestützten Notlaufstützkörpers gemäß dem Stand der Technik.

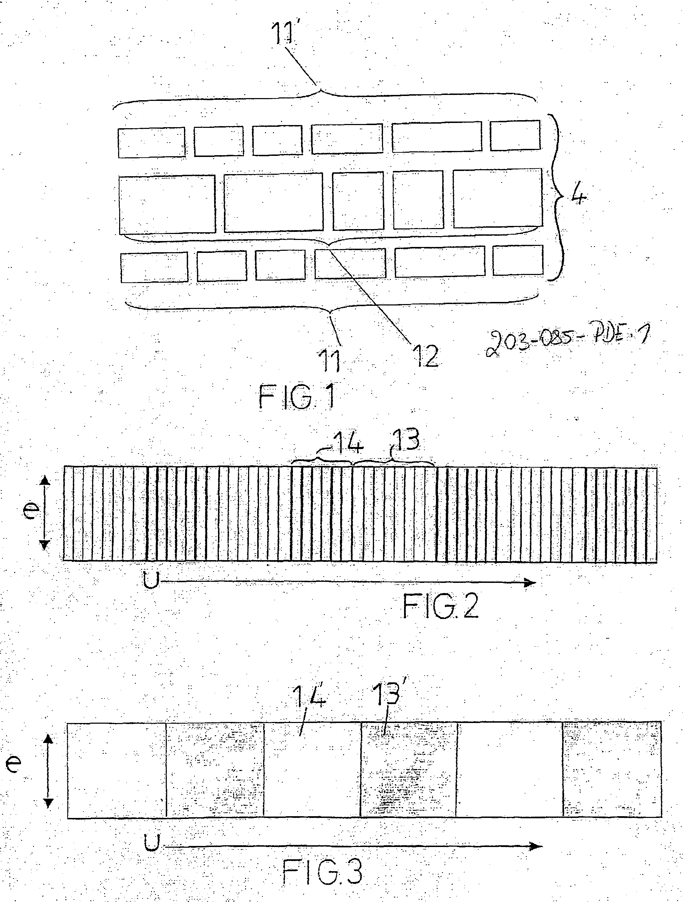

In der Figur 4 ist ein Luftreifen 1 gemäß dem Stand der Technik dargestellt, bei dem eine aktive Gebereinrichtung in Form von in der Reifenseitenwand 15 angeordneten, permanent magnetischen Arealen 16 angeordnet sind. Die Drehzahl eines solchermaßen ausgerüsteten Reifens wird dann über einen entsprechend ausgebildeten Magnetfeldsensor 17 detektiert. Die über den Magnetfeldsensor 17 detektierten Drehzahlsignale der einzelnen Räder werden an eine zentrale Recheneinheit weitergeleitet, die ausgangsseitig mit einer Anzeige oder Warneinrichtung verbunden ist und bei Druckverlust eine entsprechenden Warnmeldung an den Fahrer ausgibt. Die zentrale Recheneinheit beinhaltet eine Signalverarbeitungseinheit mit einer Einrichtung zur Auswertung und zum Vergleich der Drehzahlausgangssignale der einzelnen Räder sowie zur Erzeugung eines Warnsignales.

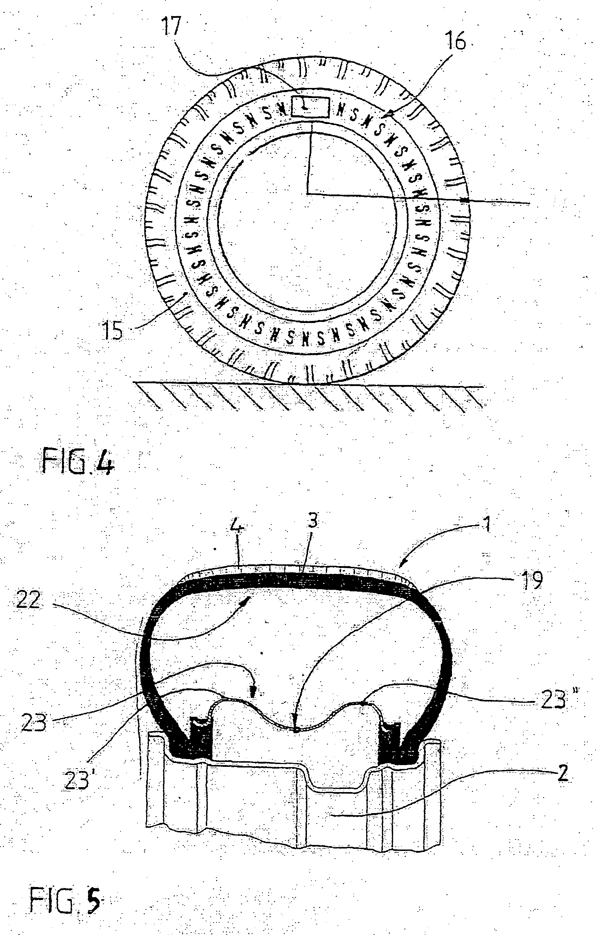

In der Figur 5 ist eine Schnittdarstellung durch einen Luftreifen 1 dargestellt, der auf einer Felge 2 montiert ist und mit ihr zusammen ein Kraftfahrzeugrad bildet. Der Luftreifen 1 besteht unter anderem aus einer Karkasse 3 und einer auf der Karkasse 3 angeordneten Lauffläche 4, wobei innerhalb des Luftreifens 1 eine Notlaufeinrichtung in Gestalt eines Notlaufstützkörpers 19 angeordnet ist. Der Notlaufstützkörper 19 ist an seiner Notlauffläche 23 mit über den Umfang verteilten Einbuchtungen versehen, die gleichmäßig über den Umfang verteilt sind. Bei dem dargestellten Notlaufstützkörper 19 ist die Notlauffläche 23 mit zur Innenseite der Lauffläche 4 vorspringenden Wölbungen 23' und 23" versehen, wobei die Einbuchtungen symmetrisch auf jeweils den beiden Wölbungen 23' und 23" ausgebildet sind. Bei einem plötzlichen Luftverlust legt sich die Innenseite 22 der Lauffläche 4 des Reifens 1 an die Außenfläche der Notlauffläche 23 des Notlaufstützkörpers 19 an, wodurch ein für den Notlaufzustand ausreichend sicherer Fahrbetrieb ermöglicht und das Abspringen des Luftreifens 1 von der Felge 2 zuverlässig verhindert wird. Der Notlaufstützkörper 19 ist dabei in einer ringförmigen, an der Felge umlaufenden Gummiwulst einvulkanisiert. Eine solche Ausgestaltung ist hinsichtlich der Montierbarkeit und des Gewichtes nachteilig. Ebenfalls wird erst bei einem nahezu vollständigen Druckverlust eine entsprechende Drehschwingung aufgeprägt, die dann durch ein DDS detektiert werden kann. Die Lauffläche und die Karkasse eines solchen Reifens gemäß der Figur 5 weisen eine homogene Struktur auf, deren Ziel ein maximaler Rundlauf ist.

Demgegenüber ist in der Figur 1 eine erfindungsgemäße Variante mit komplementär angeordneten, schwingungserzeugenden Pitchfolgen der Schulterbereiche und des Mittenbereiches einer Lauffläche 4 gezeigt, wobei die Seitenpitchfolgen 11, 11' und die Mittenpitchfolge 12 dergestalt angeordnet sind, dass bei korrektem Reifeninnendruck und entsprechend vollständiger Auflage der Lauffläche 4 auf der Fahrbahn die durch die Pitchfolgen 11, 11', 12 erzeugten Schwingungen einander kompensieren. Verringert sich der Reifeninnendruck, hebt sich der Mittenbereich der Lauffläche 4 von der Fahrbahn ab und die Reifenaufstandsfläche wird durch die Schulterbereiche des Reifens gebildet. In diesen Schulterbereichen sind die Seitenpitchfolgen 11,11' angeordnet, die im vorliegenden Beispiel eine untereinander unterschiedliche Größe in Umfangsrichtung aufweisen. Die Abstände und die Anordnung ist dabei so gewählt, dass das Reifenprofil mit seinen Pitchfolgen und Profilstegen 11, 11', 12 und Profilstegen bzw. Profilrillen bei vorschriftsmäßigem Luftdruck schwingungsfrei dreht, weil bei vorschriftsmäßigem Bodenkontakt durch Flächenpressung die Schulter- und Mittenbereiche in der Reifenaufstandsfläche so abrollen, dass die durch die Pitchfolgen 11,11',12 erzeugten Schwingungen einander kompensieren. Sobald der Mittenbereich des Luftreifens 1 den vorgesehenen und vorgeschriebenen Bodenkontakt aufgrund eines zu geringen Luftdruckes verliert, wird dem Luftreifen 1 eine Drehschwingung aufgezwungen, die durch ein DDS leichter als bisher zu detektieren ist und gegebenenfalls auch vom Fahrer bemerkt werden kann.

In der Figur 2 ist eine Variante der Erfindung dargestellt, bei der Karkasskorde über die Umfangrichtung u jeweils in Gruppen 13, 14 alternierend zueinander angeordnet sind, wobei die Dehnung e der Karkasskorde gruppenweise unterschiedlich ist. Die Elastizitätsmoduli der jeweiligen Korde in den unterschiedlichen Gruppen 13, 14 werden nun so eingestellt, dass der Reifen bei vorgeschriebenem Reifenluftdruck die erforderliche Rundheit aufweist, die für den üblichen Fahrbetrieb erforderlich ist. Um dies zu ermöglichen, sind die Karkasskorden als sogenannte PAC (Process Adaptive Cords) ausgebildet, deren Elastizitätsmoduli sich in Abhängigkeit von der einwirkenden Zugkraft ändert. Bei niedrigen Zugkräften weisen solche PAC niedrige Elastizitätsmoduli und damit ein ausgeprägtes Dehnverhalten auf, während bei hohen Zugkräften, also entsprechend einem hohen Reifeninnendruck, hohe Elastizitätsmoduli und damit eine geringere Dehnung vorhanden sind. Bei Nachlassen des Reifeninnendruckes wird aufgrund der entsprechenden Ausgestaltung der PAC in diesem Bereich des Reifens eine weichere Struktur auftreten, die zu Schwingungen beim Abrollen des Reifens führt, was durch ein DDS leicht detektiert werden kann.

Alternativ zu dem Einsatz von PAC können die unterschiedlichen Dehnungsverhalten in den Gruppen 13, 14 durch unterschiedliche Twistlevel, Materialien, Pre-Treatment oder Dips realisiert werden.

Alternativ dazu ist gemäß Figur 3 vorgesehen, dass in Umfangsrichtung u jeweils gruppenweise Gummimaterialien mit unterschiedlichem Dehnungsverhalten bzw. unterschiedlichen Elastizitätsmoduli angeordnet sind. Diese Gruppen 13', 14' sind alternierend angeordnet und vorzugsweise im Karkassmaterial, in der Base oder im Gürtel eingebaut. Bei korrekt eingestelltem Reifeninnendruck ist ein so ausgestalteter Luftreifen im Wesentlichen rund, lediglich bei Absinken des Reifeninnendruckes bildet sich eine leichte Welligkeit der Reifenoberfläche gegenüber dem Umfang aus, die leicht detektierbar ist.

## Patentansprüche

1. Luftreifen für Kraftfahrzeugräder mit einer Karkasse, auf der eine Lauffläche aufgebracht ist, **dadurch gekennzeichnet, dass** in der Karkasse (3) oder in der Lauffläche (4) Abschnitte (11, 11', 12; 13, 14; 13', 14') mit unterschiedlichem Schwingungsverhalten dergestalt ausgebildet sind, dass bei einem korrekten Reifeninnendruck die von den Abschnitten (11,11', 12; 13, 14; 13', 14') während des Abrollens des Luftreifens (1) erzeugten Schwingungen einander kompensieren.

2. Luftreifen nach Anspruch 1, **dadurch gekennzeichnet, dass** in Seitenbereichen der Lauffläche (4) einander gegenüberüegende Seitenpitchfolgen (11, 11') ausgebildet sind, die beim Abrollen Schwingungen erzeugen, und dass zwischen den Seitenpitchfolgen (11, 11') eine komplementär ausgebildete Mittelpitchfolge (12) ausgebildet ist, die beim Abrollen Schwingungen erzeugt, die bei vorschriftsmäßigem Reifeninnendruck die Schwingungen der Seitenpitchfolgen (11, 11') kompensieren.

3. Luftreifen nach Anspruch 1, **dadurch gekennzeichnet, dass** im Wesentlichen radial umlaufende Verstärkungselemente der Karkasse (3) über den Reifenumfang gruppenweise angeordnet sind und benachbarte Gruppen (13, 14) unterschiedliche Elasitziätsmoduli aufweisen.

4. Luftreifen nach Anspruch 3, **dadurch gekennzeichnet, dass** die Verstärkungselemente aus Karkasskorden bestehen, die einen sich in Abhängigkeit von den einwirkenden Zugkräften definiert ändernden Elastizitätsmodul aufweisen.

5. Luftreifen nach Anspruch 3 und 4, **dadurch gekennzeichnet, dass** die Karkasskorden gruppenweise abwechselnd einen normalen Elastizitätsmodul und einen sich in Abhängigkeit von den einwirkenden Zugkräften definiert ändernden Elastizitätsmodul aufweisen.

6. Luftreifen nach einem der Ansprüche 3 bis 5, **dadurch gekennzeichnet, dass** die Verstärkungselemente gruppenweise unterschiedliche Twistlevel, Vorbehandlungen oder Dips aufweisen oder aus unterschiedlichen Materialien bestehen.

7. Luftreifen nach Anspruch 1, **dadurch gekennzeichnet, dass** über den Reifenumfang verteilt gruppenweise Gummi-Materialien (13', 14') mit unterschiedlichen Elastizitätsmoduli angeordnet sind.

8. Luftreifen nach Anspruch 7, **dadurch gekennzeichnet, dass** das die Gummi-Materialien im Karkassmaterial, in der Base, in der Lauffläche oder im Gürtel angeordnet sind.

9. Luftreifen nach einem der Ansprüche 1 und 3 bis 8, **dadurch gekennzeichnet, dass** sich die Gruppen (13, 14; 13`, 14`) verschiedener Elastizitätsmoduli über unterschiedlich lange Umfangsabschnitte erstrecken.

10. Luftreifen nach Anspruch 1, **dadurch gekennzeichnet, dass** dem Luftreifen (1) ein Polygon dergestalt aufgeprägt ist, dass bei korrektem Reifeninnendruck eine kreisförmige Außenkontur des Luftreifens (1) ausgebildet ist.

## Claims

1. Pneumatic tyre for vehicle wheels, with a carcass, to which a tread is applied, **characterized in that** in the carcass (3) or in the tread (4) there are portions (11, 11', 12; 13, 14; 13', 14') with different oscillating behaviour formed in such a way that, when the tyre is inflated to the correct pressure, the oscillations produced by the portions (11, 11', 12; 13, 14; 13', 14') during the rolling of the pneumatic tyre (1) compensate one another.

2. Pneumatic tyre according to Claim 1, **characterized in that** in side regions of the tread (4) there are formed lateral pitch sequences (11, 11') which lie opposite one another and produce oscillations during rolling, and **in that** between the lateral pitch sequences (11, 11') there is formed a complementary central pitch sequence (12), which during rolling produces oscillations which compensate for the oscillations of the lateral pitch sequences (11, 11') when the tyre is inflated to the correct pressure.

3. Pneumatic tyre according to Claim 1, **characterized in that** reinforcing elements of the carcass (3), running around substantially radially, are arranged in groups over the circumference of the tyre, and neighbouring groups (13, 14) have different moduli of elasticity.

4. Pneumatic tyre according to Claim 3, **characterized in that** the reinforcing elements comprise carcass cords which have a modulus of elasticity that changes in a defined manner in dependence on the tensile forces acting.

5. Pneumatic tyre according to Claims 3 and 4, **characterized in that** the carcass cords have alternately in groups a normal modulus of elasticity and a modulus of elasticity that changes in a defined manner in dependence on the tensile forces acting.

6. Pneumatic tyre according to one of Claims 3 to 5, **characterized in that** the reinforcing elements have in groups different twist levels, pretreatments or dips or consist of different materials.

7. Pneumatic tyre according to Claim 1, **characterized in that** rubber materials (13', 14') with different moduli of elasticity are arranged in groups distributed over the circumference of the tyre.

8. Pneumatic tyre according to Claim 7, **characterized in that** the rubber materials are arranged in the carcass material, in the base, in the tread or in the breaker belt.

9. Pneumatic tyre according to one of Claims 1 and 3 to 8, **characterized in that** the groups (13, 14; 13', 14') of different moduli of elasticity extend over circumferential portions of different lengths.

10. Pneumatic tyre according to Claim 1, **characterized in that** a polygon is impressed on the pneumatic tyre (1) in such a way that, when the tyre is inflated to the correct pressure, a circular outer contour of the pneumatic tyre (1) is formed.

## Revendications

1. Bandage pneumatique pour roues de véhicule automobile, qui présente une carcasse sur laquelle est appliquée une surface de roulement, **caractérisé en ce que** des parties (11, 11', 12; 13, 14; 13', 14') qui présentent différents comportements en oscillation sont réalisées dans la carcasse (3) ou dans la surface de roulement (4) de telle sorte que, lorsque la pression intérieure du bandage est correcte, les oscillations créées par les parties (11, 11', 12; 13, 14; 13', 14') pendant que le bandage pneumatique (1) roule se compensent mutuellement.

2. Bandage pneumatique selon la revendication 1, **caractérisé en ce que** des successions (11, 11') de pas latéraux mutuellement opposées qui créent des oscillations lors du roulage sont formées dans les parties latérales de la surface de roulement (4) et **en ce qu'**une succession complémentaire (12) de pas moyen qui, lors du roulage, crée des oscillations qui compensent les oscillations des successions (11, 11') de pas latéraux lorsque le bandage est gonflé à la pression intérieure correcte est formée entre les successions (11, 11') de pas latéraux.

3. Bandage pneumatique selon la revendication 1, **caractérisé en ce que** des éléments de renfort de la carcasse (3), qui s'étendent essentiellement radialement, sont disposés par groupes à la périphérie du pneu, des groupes (13, 14) voisins ayant des modules d'élasticité différents.

4. Bandage pneumatique selon la revendication 3, **caractérisé en ce que** les éléments de renfort sont constitués de câbles de carcasse qui présentent un module d'élasticité variable défini en fonction des forces de traction exercées sur eux.

5. Bandage pneumatique selon les revendications 3 et 4, **caractérisé en ce que** les groupes de câbles de carcasse présentent en alternance un module d'élasticité normal et un module d'élasticité variable défini en fonction des forces de traction qui y sont exercées.

6. Bandage pneumatique selon l'une des revendications 3 à 5, **caractérisé en ce que** les groupes d'éléments de renfort possèdent différents niveaux de torsion, ont subi différents prétraitements ou imprégnations ou sont constitués de matériaux différents.

7. Bandage pneumatique selon la revendication 1, **caractérisé en ce que** des groupes (13', 14') de matériaux de caoutchouc à différents modules d'élasticité sont répartis à la périphérie du bandage.

8. Bandage pneumatique selon la revendication 7, **caractérisé en ce que** les matériaux de caoutchouc sont disposés dans le matériau de carcasse, dans la base, dans la surface de roulement ou dans la ceinture.

9. Bandage pneumatique selon l'une des revendications 1 et 3 à 8, **caractérisé en ce que** les groupes (13, 14; 13', 14') à différents modules d'élasticité s'étendent sur des parties périphériques de différentes longueurs.

10. Bandage pneumatique selon la revendication 1, **caractérisé en ce qu'**un polygone est imprimé sur le bandage pneumatique (1), de telle sorte que lorsque le bandage est gonflé à la pression intérieure correcte, le bandage pneumatique (1) présente un contour extérieur circulaire.
